# EUROPÄISCHE PATENTSCHRIFT

(11) **EP 3 199 833 B1**
(45) Veröffentlichungstag und Bekanntmachung des Hinweises auf die Patenterteilung: **29.07.2020**
(21) Anmeldenummer: 16201102.7
(22) Anmeldetag: 29.11.2016
(51) Int. Cl.: F16G 13/16

(54) **ENERGIEFÜHRUNGSKETTE**
ENERGY CONVEYING CHAIN
CHAÎNE CONDUCTRICE D'ÉNERGIE

(30) Priorität: 28.01.2016 DE 102016000864
(43) Veröffentlichungstag der Anmeldung: 02.08.2017
(73) Patentinhaber: Murrplastik Systemtechnik GmbH, 71570 Oppenweiler (DE)
(72) Erfinder:
(74) Vertreter: Patentanwälte Bregenzer und Reule Partnerschaftsgesellschaft mbB

(56) Entgegenhaltungen:
- DE-A1-102005 013 430
- US-A- 5 020 313
- US-A- 5 157 913

## Beschreibung

Die Erfindung betrifft eine Energieführungskette gemäß Oberbegriff des Anspruchs 1.

Aus der DE 10 2005 013 430 A1 ist ein Kettenglied für eine Energieführungskette bekannt, dessen Prinzip, die Rahmenstege lösbar mittels Befestigungselementen an den Seitengliedern zu befestigen, mittlerweile breite Anwendung findet. Das Kettenglied weist zwei im Abstand zueinander angeordnete Seitenglieder auf, welche mittels zweier Rahmenstege lösbar miteinander verbunden sind. Ein Rahmensteg ist an einer Unterseite der Energieführungskette angeordnet, während der andere Rahmensteg an einer Oberseite angeordnet ist, so dass die Seitenglieder und die Rahmenstege einen Aufnahmekanal für Versorgungsleitungen einschließen. Möglich ist aber auch, dass lediglich einer der Rahmenstege lösbar mit den Seitengliedern verbunden ist, während der andere fest mit den Seitengliedern verbunden ist. Die jeweils zwei Seitenglieder lösbar miteinander verbindenden Rahmenstege sind mit jedem Seitenglied mittels eines Befestigungselements verbunden, welches durch eine sich in einer Kettenquerrichtung von einer Außenseite des betreffenden Seitenglieds zu dessen Innenseite erstreckende Öffnung durchgreift. Die Enden dieser Rahmenstege sind in einer zur Unterseite bzw. zur Oberseite offenen Ausnehmung angeordnet und mit den Befestigungselementen mittels einer lösbaren Rastverbindung verbunden. Zur Bildung einer Energieführungskette werden mehrere solcher Kettenglieder in einer Kettenlängsrichtung aneinandergereiht und gelenkig miteinander verbunden, so dass sie begrenzt gegeneinander verschwenkbar sind. Die Befestigungselemente sind dabei so dimensioniert, dass sie seitlich nicht aus den Kettengliedern herausragen, so dass sie beim Bewegen der Energieführungskette nicht im Weg sind. Wird eine solche Energieführungskette mit den Unterseiten ihrer Kettenglieder auf einer Führungseinrichtung, beispielsweise in einer Führungswanne, abgelegt, so entsteht ein Geräusch, das als unangenehm empfunden wird. Insbesondere in einer Werkhalle, in der gleichzeitig mehrere Energieführungsketten bewegt werden, können sich die Geräusche beim Ablegen zu einem beträchtlichen Lärmpegel addieren. Aus der DE 10 2005 013 430 A1 ist auch eine Energieführungskette gemäß Oberbegriff des Anspruchs 1 bekannt. Aus der US 5,020,313 ist eine Energieführungskette bekannt, die an den Seitengliedern befestigte Gleitschuhe aufweist.

Es ist daher Aufgabe der Erfindung, eine Energieführungskette der eingangs genannten Art derart weiterzuentwickeln, dass ihr Betrieb weniger Lärm verursacht.

Diese Aufgabe wird erfindungsgemäß durch eine Energieführungskette mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, den Lärm beim Ablegen der Energieführungskette durch unter ihrer Unterseite angeordnete Dämpfungselemente zu verringern. Indem die Dämpfungselemente als zum Befestigungselement gehörende Dämpfungspartien ausgebildet sind, müssen keine zusätzlichen Bauteile an der Energieführungskette befestigt werden und diese braucht keine gesonderten Befestigungsmittel für die Dämpfungselemente aufzuweisen. Die Aufgabe, den Lärm zu reduzieren, kann daher mit einer herkömmlichen Energieführungskette gelöst werden, bei der lediglich die Befestigungselemente ausgetauscht werden. Dabei ist es von Vorteil, wenn lediglich an der Unterseite der Energieführungskette Befestigungselemente mit Dämpfungspartien zum Einsatz kommen, während die Rahmenstege an der Oberseite der Energieführungskette mit herkömmlichen, seitlich nicht aus den Kettengliedern herausragenden Befestigungselementen befestigt werden. Vorteilhaft sind die Befestigungspartie, die Verbindungspartie und die Dämpfungspartie des jeweiligen Befestigungselements einstückig miteinander verbunden. Dies vereinfacht die Herstellung, die beispielsweise in einem Ein- oder Mehrkomponenten-Spritzgussverfahren erfolgen kann. Dabei ist es vorteilhaft, dass die Befestigungspartien, die Dämpfungspartien und die Verbindungspartien aus dem gleichen Material bestehen, was die Herstellung noch weiter vereinfacht. Es ist jedoch möglich, dass an die Befestigungspartien einerseits und an die Dämpfungspartien andererseits unterschiedliche Anforderungen gestellt werden. So müssen die Befestigungspartien eine feste Verbindung mit den Rahmenstegen ermöglichen, während die Dämpfungspartien möglichst weich sein sollten. Aus diesem Grund kann es vorteilhaft sein, dass die Befestigungspartien einerseits und die Dämpfungspartien andererseits aus unterschiedlichen Materialien hergestellt sind. Da die Verbindungspartien seitlich aus den Kettengliedern ragen können und dann ebenfalls mit Bauteilen beispielsweise einer Ablegewanne kollidieren und Lärm verursachen können, ist es vorteilhaft, wenn sie ebenfalls Dämpfungseigenschaften aufweisen. Sie sind daher vorteilhaft aus demselben Material hergestellt wie die Dämpfungspartien. Als Material für die Befestigungspartien kommt insbesondere ein Hartkunststoff infrage, vorzugsweise Polyamid. Dagegen kommt als Material für die Verbindungspartien und die Dämpfungspartien insbesondere ein Elastomer infrage, vorzugsweise Polyurethan (PUR). Um die Dämpfungspartien und gegebenenfalls auch die Verbindungspartien trotz der geforderten Dämpfungseigenschaften möglichst abriebfest auszuführen, bestehen sie vorteilhaft jeweils aus einem Material mit einer Shore-Härte von mindestens 80, vorzugsweise von mindestens 90.

Den unterschiedlichen Anforderungen an die Befestigungspartien einerseits und an die Dämpfungspartien andererseits kann aber auch durch die Wahl einer geeigneten Geometrie begegnet werden, insbesondere dann, wenn die Befestigungselemente einstückig aus einem Material gefertigt werden sollen. Zweckmäßig weisen die Dämpfungspartien eine vom Seitenglied abgewandte konvexe Oberfläche auf, sodass sie beim Ablegen der Energieführungskette ein Stück weit auf dem Untergrund abrollen. Vorteilhaft liegen die Dämpfungspartien jeweils an der Unterseite des jeweiligen Seitenglieds an oder weisen dort ein geringes Spiel auf, indem ein geringer Spalt zwischen der Dämpfungspartie und der Unterseite des Seitenglieds frei bleibt. Dadurch wird eine den Verschleiß begünstigende Verformung des Befestigungselements beim Ablegen der Energieführungskette minimiert. Gemäß einer bevorzugten Ausführungsform weisen die Dämpfungspartien jeweils einen Basisteil mit einer der Unterseite des jeweiligen Seitenglieds zugewandten Anlagefläche und einen Auflageteil mit einer dem jeweiligen Seitenglied abgewandten Oberfläche auf, wobei zwischen dem Basisteil und dem Auflageteil ein Hohlraum angeordnet ist. Dieser Hohlraum erlaubt eine stärkere Verformung der Dämpfungspartie im Bereich des Auflageteils, sodass die Dämpfungseigenschaften weiter verbessert werden. Der Hohlraum erstreckt sich zweckmäßig zwischen zwei offenen Enden in Kettenquerrichtung.

Im folgenden wird die Erfindung anhand eines in der Zeichnung schematisch dargestellten Ausführungsbeispiels näher erläutert. Es zeigen
- Figur 1a, 1b: einen Abschnitt einer Energieführungskette in Seitenansicht und in perspektivischer Ansicht;

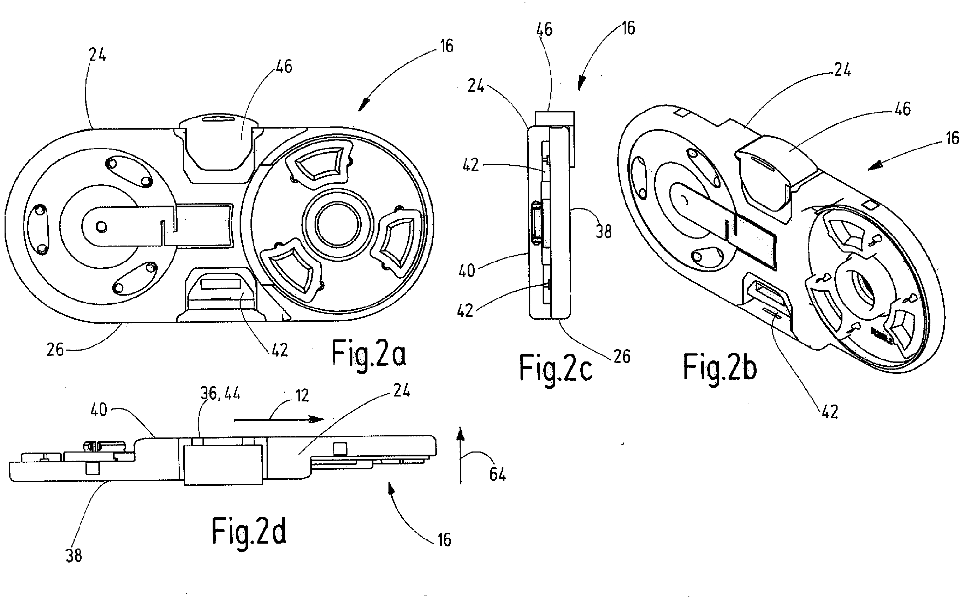

- Figur 2a-2d: ein Seitenglied eines Kettenglieds der Energieführungskette gemäß Figur 1a, 1b in Seitenansicht, in perspektivischer Ansicht, in Frontansicht und in Draufsicht und
- Figur 3a-3c: ein Befestigungselement in Seitenansicht, in perspektivischer Ansicht und in Frontansicht.

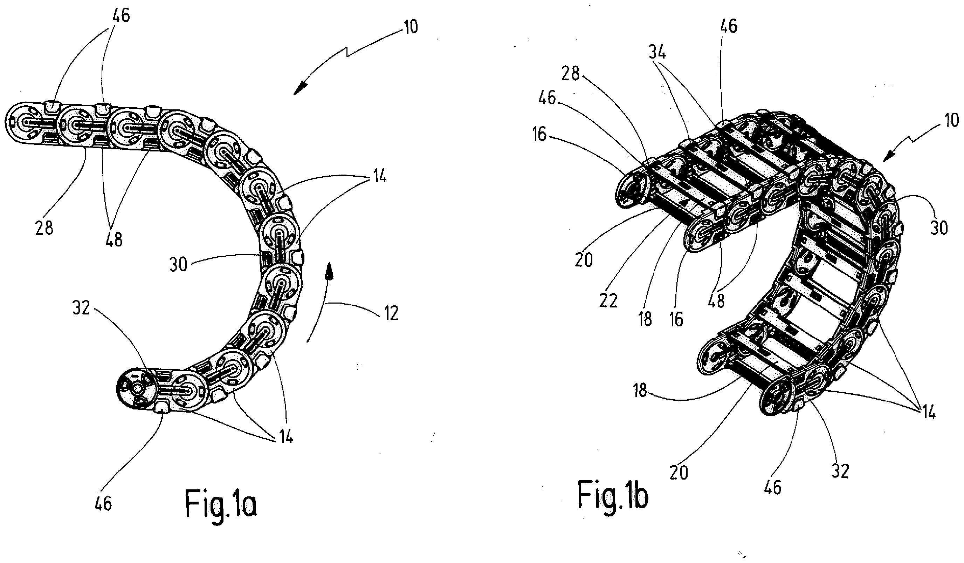

Die in Figur 1a, 1b abschnittsweise dargestellte Energieführungskette 10 weist mehrere, gelenkig miteinander verbundene und in einer Kettenlängsrichtung 12 aufeinanderfolgende Kettenglieder 14 auf, welche jeweils zwei im Abstand zueinander angeordnete Seitenglieder 16 aufweisen, die mittels eines ersten Rahmenstegs 18 und eines zweiten Rahmenstegs 20 miteinander verbunden sind. Die Seitenglieder 16 und die Rahmenstege 18, 20 umschließen einen Aufnahmekanal 22 zur Aufnahme von Vervorgungsleitungen wie elektrischen Kabeln, Wasserleitungen, Druckluftschläuchen und dergleichen. Im Betrieb wird die Energieführungskette 10 in einer Ablegewanne abgelegt, wobei Unterseiten 24 der Seitenglieder 16 und die ersten Rahmenstege 18 unten, Oberseiten 26 der Seitenglieder 16 und die zweiten Rahmenstege 20 oben liegend angeordnet sind. Die Kettenglieder 14 können, wie in Figur 1a, 1b angedeutet, so gegeneinander verschwenkt werden, dass ein Obertrum 28 auf einem in der Ablegewanne liegenden, über einen gebogenen Abschnitt 30 mit ihm verbundenen Untertrum 32 abgelegt wird. Beim Obertrum 28 sind die Unterseiten 24 der Seitenglieder 16 oben liegend und die Oberseiten 26 der Seitenglieder 16 unten liegend angeordnet.

Die Rahmenstege 18, 20 sind lösbar an den Seitengliedern 16 befestigt, um ein Öffnen des Aufnahmekanals 22 und somit ein nachträgliches Bestücken der Energieführungskette 10 mit Versorgungsleitungen bzw. den Austausch defekter Versorgungsleitungen zu ermöglichen. Dabei sind die Enden 34 der Rahmenstege 18, 20 in zur Unterseite 24 bzw. zur Oberseite 26 des betreffenden Seitenglieds 16 offenen Ausnehmungen 36 angeordnet. In jede Ausnehmung 36 mündet eine sich von der Außenseite 38 des betreffenden Seitenglieds 16 zu dessen Innenseite 40, an der die Ausnehmung 36 angeordnet ist, erstreckende Öffnung 42. Die Ausnehmungen 36 werden jeweils durch einen Absatz 44 begrenzt, wobei die jeweils an der nach oben weisenden Seite der Energieführungskette 10 angeordneten Rahmenstege 18, 20 mit ihren Enden 34 auf den jeweiligen Absätzen 44 aufliegen. Die ersten Rahmenstege 18 sind mittels erster Befestigungselemente 46 an den Seitengliedern 16 befestigt, während die zweiten Rahmenstege 20 mittels zweiter Befestigungselemente 48 an den Seitengliedern 16 befestigt sind. Die ersten und die zweiten Befestigungselemente 46, 48 weisen dabei die Gemeinsamkeit auf, dass sie jeweils eine durch die jeweilige Öffnung 42 durchgreifende, mittels einer Rastverbindung mit dem betreffenden Rahmensteg 18, 20 lösbar verbundene Befestigungspartie 50 aufweisen. Die zweiten Befestigungselemente 48 sind dabei so ausgebildet wie die in der DE 10 2005 013 430 A1 beschriebenen Befestigungselemente und sind vollständig im jeweiligen Kettenglied 14 aufgenommen. Das bedeutet, dass sie nicht aus der Außenseite 38 des jeweiligen Seitenglieds 16 herausragen, solange sie mit dem jeweiligen Rahmensteg 20 verbunden sind.

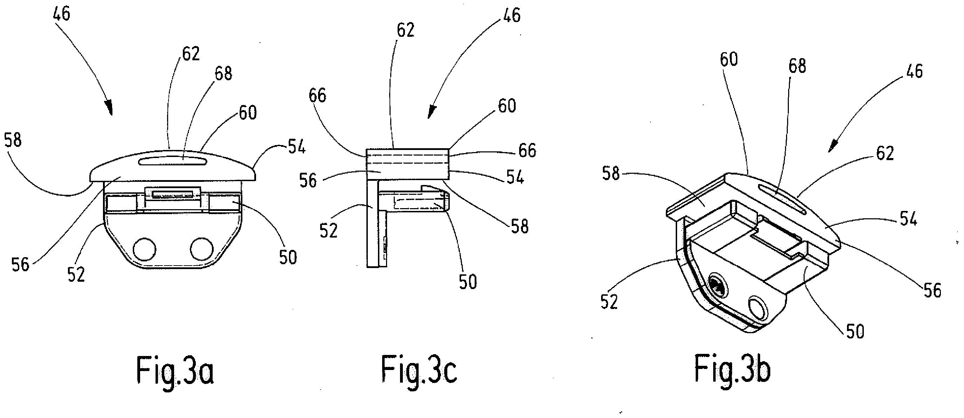

Im Gegensatz zu den zweiten Befestigungselementen 48 ragen die ersten Befestigungselemente 46 aus den Seitengliedern 16 an deren Außenseite 38 heraus. Sie weisen, wie in Figur 3a-3c im Detail dargestellt ist, ebenfalls eine Befestigungspartie 50 auf, die mit der Befestigungspartie 50 der zweiten Befestigungselemente 48 zumindest geometrisch baugleich ist und im hier gezeigten Ausführungsbeispiel aus elastomerem Polyurethan gefertigt ist. Mit der Befestigungspartie 50 ist eine Verbindungspartie 52, die ebenfalls aus elastomerem Polyurethan gefertigt ist, einstückig verbunden, die seitlich aus dem jeweiligen Seitenglied 16 ragt und dessen Außenseite 48 stellenweise überdeckt. Die Verbindungspartie 52 erstreckt sich bis zur Unterseite 24 des Seitenglieds 16 und ist dort mit einer Dämpfungspartie 54 einstückig verbunden, welche ebenfalls aus elastomerem Polyurethan besteht und das betreffende Seitenglied 16 an dessen Unterseite 24 untergreift, so dass die Energieführungskette 10 beim Ablegen in der Ablegewanne auf die Dämpfungspartien 54 zu liegen kommt. Jede der Dämpfungspartien 54 weist ein Basisteil 56 mit einer an der Unterseite 24 des jeweiligen Seitenglieds 16 anliegenden Anlagefläche 58 sowie ein einstückig mit dem Basisteil 56 verbundenes Auflageteil 60 auf, das eine konvex gewölbte Oberfläche 62 aufweist, die der Unterseite 24 des jeweiligen Seitenglieds 16 abgewandt ist. Das Basisteil 56 und das Auflageteil 60 schließen einen sich in einer zur Kettenlängsrichtung 12 quer verlaufenden Kettenquerrichtung 64 zwischen zwei offenen Enden 66 erstreckenden Hohlraum 68 ein.

Im vorliegenden Ausführungsbeispiel ist jedes der ersten Befestigungselemente 56 identisch ausgebildet und weist eine Dämpfungspartie 54 auf. Es ist jedoch auch möglich, nur an jedem n-ten Kettenglied 14 zur Befestigung der ersten Rahmenstege 18 solche Befestigungselemente 46 vorzusehen. Des weiteren ist es möglich, die zweiten Rahmenstege 20 fest mit den Seitengliedern 16 zu verbinden, insbesondere die beiden Seitenglieder 16 und den zweiten Rahmensteg 20 einzelner oder aller Kettenglieder 14 einstückig auszubilden. Um eine feste Verbindung mit dem jeweiligen Rahmensteg 18, 20 zu gewährleisten, ist es auch möglich, die Befestigungspartie 50 aus einem Hartkunststoff, im vorliegenden Fall aus Polyamid, zu fertigen. Die ersten Befestigungselemente 46 sind dann mittels eines Zweikomponenten-Spritzgussverfahrens hergestellt.

Zusammenfassend ist Folgendes festzuhalten: Die Erfindung betrifft eine Energieführungskette 10 mit mehreren, gelenkig miteinander verbundenen und in einer Kettenlängsrichtung 12 aufeinanderfolgenden Kettengliedern 14, wobei jedes Kettenglied 14 zwei im Abstand zueinander angeordnete Seitenglieder 16 aufweist, welche mittels mindestens eines Rahmenstegs 18, 20 lösbar miteinander verbunden sind, wobei die jeweils zwei Seitenglieder 16 lösbar miteinander verbindenden Rahmenstege 18, 20 mit jedem Seitenglied 16 mittels eines Befestigungselements 46, 48 verbunden sind, dass durch eine sich in einer Kettenquerrichtung 64 von der Außenseite 38 des betreffenden Seitenglieds 16 zu dessen Innenseite 40 erstreckende Öffnung 42 durchgreift und mit einem in einer zu einer Unterseite 24 des betreffenden Seitenglieds 16 offenen Ausnehmung 36 angeordneten Ende 34 des betreffenden Rahmenstegs 18, 20 lösbar verbunden und vorzugsweise verrastet ist. Erfindungsgemäß ist vorgesehen, dass zumindest ein Teil der Befestigungselemente 46 jeweils eine durch die jeweilige Öffnung 42 ragende und mit dem jeweiligen Rahmensteg 18 verbundene Befestigungspartie 50, eine an der Außenseite 38 des jeweiligen Seitenglieds 16 aus der Öffnung 42 ragende, sich bis zur Unterseite 24 des Seitenglieds 16 erstreckende und mit der Befestigungspartie 50 verbundene Verbindungspartie 52 und eine mit der Verbindungspartie 52 verbundene, das Seitenglied 16 an seiner Unterseite 24 untergreifende Dämpfungspartie 54 aufweist.

## Patentansprüche

1. Energieführungskette mit mehreren, gelenkig miteinander verbundenen und in einer Kettenlängsrichtung (12) aufeinanderfolgenden Kettengliedern (14), wobei jedes Kettenglied (14) zwei im Abstand zueinander angeordnete Seitenglieder (16) aufweist, welche mittels mindestens eines Rahmenstegs (18, 20) lösbar miteinander verbunden sind, wobei die jeweils zwei Seitenglieder (16) lösbar miteinander verbindenden Rahmenstege (18, 20) mit jedem Seitenglied (16) mittels eines Befestigungselements (46, 48) verbunden sind, das durch eine sich in einer Kettenquerrichtung (64) von der Außenseite (38) des betreffenden Seitenglieds (16) zu dessen Innenseite (40) erstreckende Öffnung (42) durchgreift und mit einem in einer zu einer Unterseite (24) des betreffenden Seitenglieds (16) offenen Ausnehmung (36) angeordneten Ende (34) des betreffenden Rahmenstegs (18, 20) lösbar verbunden und vorzugsweise verrastet ist, **dadurch gekennzeichnet, dass** zumindest ein Teil der Befestigungselemente (46) jeweils eine durch die jeweilige Öffnung (42) ragende und mit dem jeweiligen Rahmensteg (18) verbundene Befestigungspartie (50), eine an der Außenseite (38) des jeweiligen Seitenglieds (16) aus der Öffnung (42) ragende, sich bis zur Unterseite (24) des Seitenglieds (16) erstreckende und mit der Befestigungspartie (50) verbundene Verbindungspartie (52) und eine mit der Verbindungspartie (52) verbundene, das Seitenglied (16) an seiner Unterseite (24) untergreifende Dämpfungspartie (54) aufweist.

2. Energieführungskette nach Anspruch 1, **dadurch gekennzeichnet, dass** die Befestigungspartie (50), die Verbindungspartie (52) und die Dämpfungspartie (54) des jeweiligen Befestigungselements (46) einstückig miteinander verbunden sind.

3. Energieführungskette nach Anspruch 1 oder 2, **dadurch gekennzeichnet, dass** die Befestigungspartie (50), die Verbindungspartie (52) und die Dämpfungspartie (54) des jeweiligen Befestigungselements (46) aus demselben Material hergestellt sind.

4. Energieführungskette nach einem der vorangehenden Ansprüche, **dadurch gekennzeichnet, dass** die Befestigungspartien (50) einerseits und die Dämpfungspartien (54) sowie vorzugsweise die Verbindungspartien (52) andererseits aus unterschiedlichen Materialien hergestellt sind.

5. Energieführungskette nach einem der vorangehenden Ansprüche, **dadurch gekennzeichnet, dass** die Befestigungspartien (50) zumindest teilweise aus einem Hartkunststoff, vorzugsweise aus Polyamid, bestehen.

6. Energieführungskette nach einem der vorangehenden Ansprüche, **dadurch gekennzeichnet, dass** die Verbindungspartien (52) und/oder die Dämpfungspartien (54) zumindest teilweise aus einem elastomeren Material, vorzugsweise aus Polyurethan (PUR) bestehen.

7. Energieführungskette nach einem der vorangehenden Ansprüche, **dadurch gekennzeichnet, dass** die Dämpfungspartien (54) jeweils aus einem Material mit einer Shore-Härte von mindestens 80, vorzugsweise von mindestens 90, bestehen.

8. Energieführungskette nach einem der vorangehenden Ansprüche, **dadurch gekennzeichnet, dass** die Dämpfungspartien (54) eine vom Seitenglied (16) abgewandte konvexe Oberfläche (62) aufweisen.

9. Energieführungskette nach einem der vorangehenden Ansprüche, **dadurch gekennzeichnet, dass** die Dämpfungspartien (54) jeweils an der Unterseite (24) des jeweiligen Seitenglieds (16) anliegen.

10. Energieführungskette nach einem der vorangehenden Ansprüche, **dadurch gekennzeichnet, dass** die Dämpfungspartien (54) jeweils einen Basisteil (56) mit einer der Unterseite (24) des jeweiligen Seitenglieds (16) zugewandten Anlagefläche (58) und einen Auflageteil (60) mit einer dem jeweiligen Seitenglied (16) abgewandten Oberfläche (62) aufweisen und dass zwischen dem Basisteil (56) und dem Auflageteil (60) ein Hohlraum (68) angeordnet ist.

11. Energieführungskette nach Anspruch 10, **dadurch gekennzeichnet, dass** sich der Hohlraum (68) zwischen zwei offenen Enden (66) in Kettenquerrichtung (64) erstreckt.

12. Energieführungskette nach einem der vorangehenden Ansprüche, **dadurch gekennzeichnet, dass** die Seitenglieder (16) jedes Kettenglieds (14) mittels zweier Rahmenstege (18, 20) lösbar miteinander verbunden sind, wobei jedes der Enden (34) eines ersten Rahmenstegs (18) in der zu der Unterseite (24) der Seitenglieder (16) offenen Ausnehmung (36) angeordnet ist, wobei jedes der Enden (34) eines zweiten Rahmenstegs (20) in einer zu einer der Unterseite (24) abgewandten Oberseite (26) des betreffenden Seitenglieds (16) offenen Ausnehmung (36) angeordnet ist und mit einem durch eine sich von der Außenseite (38) des Seitenglieds (16) zu dessen Innenseite (40) erstreckende Öffnung (42) durchgreifenden zweiten Befestigungselement (48) lösbar verbunden ist, und wobei die zweiten Befestigungselemente (48) vollständig in den Kettengliedern (14) aufgenommen sind und nicht aus den Außenseiten (38) der Seitenglieder (16) vorstehen.

## Claims

1. Energy chain with a plurality of chain links (14) articulatedly connected to one another and consecutive in the chain longitudinal direction (12), wherein each chain link (14) has two side links (16) arranged at a distance to one another which are detachably connected to one another by means of at least one frame web (18, 20), wherein the frame webs (18, 20) connecting each two side links (16) detachably to one another are connected to each side link (16) by means of a fastening element (46, 48) which engages through an opening (42) extending in a chain transverse direction (64) from the outside (38) of the side link (16) in question to its inside (40) and is detachably connected with an end (34) arranged in a recess (36) opening to an underside (24) of the side link (16) in question and is preferably locked in place, **characterised in that** at least one part of the fastening elements (46) in each case has a fastening part (50) protruding through the respective opening (42) and connecting to the respective frame web (18), a connection part (52) protruding to the outside (38) of the respective side link (16) from the opening (42), extending to the underside (24) of the side link (16) and connecting to the fastening part (50) and a damping part (54) connecting to the connection part (52) and engaging under the side link (16) on its underside (24).

2. Energy chain according to claim 1, **characterised in that** the fastening part (50), the connection part (52) and the damping part (54) of the respective fastening element (46) are integrally connected to one another.

3. Energy chain according to claim 1 or 2, **characterised in that** the fastening part (50), the connection part (52) and the damping part (54) of the respective fastening element (46) are manufactured from the same material.

4. Energy chain according to any one of the preceding claims, **characterised in that** the fastening parts (50), on the one hand, and the damping parts (54) and preferably the connection parts (52), on the other hand, are manufactured from different materials.

5. Energy chain according to any one of the preceding claims, **characterised in that** the fastening parts (50) at least partially consist of a hard plastic, preferably polyamide.

6. Energy chain according to any one of the preceding claims, **characterised in that** the connection parts (52) and/or the damping parts (54) at least partially consist of an elastomer material, preferably polyurethane (PUR).

7. Energy chain according to any one of the preceding claims, **characterised in that** the damping parts (54) each consist of a material with a shore hardness of at least 80, preferably of at least 90.

8. Energy chain according to any one of the preceding claims, **characterised in that** the damping parts (54) have a convex surface (62) facing away from the side link (16).

9. Energy chain according to any one of the preceding claims, **characterised in that** the damping parts (54) each abut on the underside (24) of the respective side link (16).

10. Energy chain according to any one of the preceding claims, **characterised in that** the damping parts (54) each have a base part (56) with a contact surface (58) facing the underside (24) of the respective side link (16) and a support part (60) with a surface (62) facing away from the respective side link (16) and **in that** a cavity (68) is arranged between the base part (56) and the support part (60).

11. Energy chain according to claim 10, **characterised in that** the cavity (68) extends between two open ends (66) in the chain transverse direction (64).

12. Energy chain according to any one of the preceding claims, **characterised in that** the side links (16) of each chain link (14) are detachably connected to one another by means of two frame webs (18, 20), wherein each of the ends (34) of a first frame web (18) is arranged in the recess (36) open to the underside (24) of the side links (16), wherein each of the ends (34) of a second frame web (20) is arranged in a recess (36) open to an upper side (26) of the side link (16) in question facing away from the underside (24) and is detachably connected to a second fastening element (48) penetrating through an opening (42) extending from the outside (38) of the side link (16) to its inside (40) and wherein the second fastening elements (48) are fully received in the chain links (14) and do not protrude from the outsides (38) of the side links (16).

## Revendications

1. Chaîne de transmission d'énergie comprenant plusieurs chaînons (14) reliés les uns aux autres, de manière articulée, et se succédant mutuellement dans une direction longitudinale (12) de ladite chaîne, chaque chaînon (14) comportant deux organes latéraux (16) disposés à distance l'un de l'autre et reliés l'un à l'autre, de manière libérable, à l'aide d'au moins une barrette d'ossature (18, 20), sachant que les barrettes d'ossature (18, 20), instaurant respectivement la liaison mutuelle libérable de deux organes latéraux (16), sont reliées à chaque organe latéral (16) au moyen d'un élément de fixation (46, 48) qui traverse un orifice (42) s'étendant dans une direction transversale (64) de la chaîne à partir de la face extérieure (38) de l'organe latéral (16) considéré, vers la face intérieure (40) de ce dernier, et qui est relié de manière libérable, préférentiellement par crantage, à une extrémité (34) de la barrette d'ossature (18, 20) considérée, logée dans un évidement (36) ouvert en direction d'une face inférieure (24) de l'organe latéral (16) considéré, **caractérisée par le fait qu'**au moins une partie des éléments de fixation (46) est munie, à chaque fois, d'une zone de fixation (50) s'étendant à travers l'orifice (42) respectif, et reliée à la barrette d'ossature (18) respective ; d'une zone de liaison (52) qui fait saillie hors dudit orifice (42) à la face extérieure (38) de l'organe latéral (16) respectif, s'étend jusqu'à la face inférieure (24) dudit organe latéral (16), et est reliée à ladite zone de fixation (50) ; et d'une zone d'amortissement (54) reliée à ladite zone de liaison (52) et venant en prise par-dessous avec ledit organe latéral (16), à sa face inférieure (24).

2. Chaîne de transmission d'énergie selon la revendication 1, **caractérisée par le fait que** la zone de fixation (50), la zone de liaison (52) et la zone d'amortissement (54) de l'élément de fixation (46) respectif sont reliées mutuellement d'un seul tenant.

3. Chaîne de transmission d'énergie selon la revendication 1 ou 2, **caractérisée par le fait que** la zone de fixation (50), la zone de liaison (52) et la zone d'amortissement (54) de l'élément de fixation (46) respectif sont fabriquées à partir du même matériau.

4. Chaîne de transmission d'énergie selon l'une des revendications précédentes, **caractérisée par le fait que**, d'une part, les zones de fixation (50) et, d'autre part, les zones d'amortissement (54), ainsi que les zones de liaison (52) de préférence, sont fabriquées en des matériaux différents.

5. Chaîne de transmission d'énergie selon l'une des revendications précédentes, **caractérisée par le fait que** les zones de fixation (50) sont constituées, au moins en partie, d'une matière plastique dure et préférentiellement d'un polyamide.

6. Chaîne de transmission d'énergie selon l'une des revendications précédentes, **caractérisée par le fait que** les zones de liaison (52) et/ou les zones d'amortissement (54) sont constituées, au moins en partie, d'un matériau élastomère et préférentiellement d'un polyuréthane (PUR).

7. Chaîne de transmission d'énergie selon l'une des revendications précédentes, **caractérisée par le fait que** les zones d'amortissement (54) sont constituées, à chaque fois, d'un matériau présentant une dureté Shore d'au moins 80, de préférence d'au moins 90.

8. Chaîne de transmission d'énergie selon l'une des revendications précédentes, **caractérisée par le fait que** les zones d'amortissement (54) sont munies d'une surface convexe (62) pointant à l'opposé de l'organe latéral (16).

9. Chaîne de transmission d'énergie selon l'une des revendications précédentes, **caractérisée par le fait que** les zones d'amortissement (54) sont en applique, à chaque fois, contre la face inférieure (24) de l'organe latéral (16) respectif.

10. Chaîne de transmission d'énergie selon l'une des revendications précédentes, **caractérisée par le fait que** les zones d'amortissement (54) comprennent, à chaque fois, une partie de base (56) pourvue d'une surface de contact (58) tournée vers la face inférieure (24) de l'organe latéral (16) respectif, et une partie de support (60) dotée d'une surface (62) pointant à l'opposé dudit organe latéral (16) respectif; et **par le fait qu'**une cavité (68) se trouve entre ladite partie de base (56) et ladite partie de support (60).

11. Chaîne de transmission d'énergie selon la revendication 10, **caractérisée par le fait que** la cavité (68) s'étend entre deux extrémités ouvertes (66), dans la direction transversale (64) de ladite chaîne.

12. Chaîne de transmission d'énergie selon l'une des revendications précédentes, **caractérisée par le fait que** les organes latéraux (16) de chaque maillon (14) sont reliés les uns aux autres de manière libérable, au moyen de deux barrettes d'ossature (18, 20), chacune des extrémités (34) d'une première barrette d'ossature (18) étant logée dans l'évidement (36) ouvert en direction de la face inférieure (24) des organes latéraux (16), chacune des extrémités (34) d'une seconde barrette d'ossature (20) étant logée dans un évidement (36) ouvert vers une face supérieure (26) de l'organe latéral (16) considéré qui est tournée à l'opposé de ladite face inférieure (24), et étant reliée de manière libérable à un second élément de fixation (48) traversant un orifice (42) qui s'étend à partir de la face extérieure (38) dudit organe latéral (16), vers la face intérieure (40) de celui-ci, sachant que les seconds éléments de fixation (48) sont complètement intégrés dans les maillons (14) et ne font pas saillie au-delà des faces extérieures (38) desdits organes latéraux (16).
